# EUROPEAN PATENT SPECIFICATION

(11) **EP 3 819 782 B1**
(45) Date of publication and mention of the grant of the patent: **26.07.2023**
(21) Application number: 19207084.5
(22) Date of filing: 05.11.2019
(51) Int. Cl.: G06F 16/11, G06F 16/174

(54) **COMPUTING DEVICE, METHOD OF OPERATION AND COMPUTER PROGRAM FOR A COMPUTING DEVICE**
RECHENVORRICHTUNG, VERFAHREN ZUM BETRIEB UND COMPUTERPROGRAMM FÜR EINE RECHENVORRICHTUNG
DISPOSITIF INFORMATIQUE, PROCÉDÉ DE FONCTIONNEMENT ET PROGRAMME INFORMATIQUE POUR UN DISPOSITIF INFORMATIQUE

(43) Date of publication of application: 12.05.2021
(73) Proprietor: Vestel Elektronik Sanayi ve Ticaret A.S., 45030 Manisa (TR)
(72) Inventor: YILMAZ, Evren Gökhan, 45030 Manisa (TR); ÖZTEKIN, Güner, 45030 Manisa (TR)
(74) Representative: Flint, Adam

(56) References cited:
- US-A1- 2014 122 451
- US-A1- 2019 205 413
- US-B1- 6 477 544

## Description

### Technical Field

The present disclosure relates to a computing device, a method of operating a computing device and a computer program for a computing device.

### Background

It is common for image files to be saved to non-volatile storage of a computing device so that the image files can be quickly retrieved and presented for display on some display device of or connected to the computing device when desired or necessary. However, image files are often relatively large and take up a relatively large amount of storage space. It is desirable to minimise the amount of data storage that is required to store image files.

US2019205413A1 discloses ways to avoid file duplication in a cloud storage service. The method includes retrieving, via a computer network, one or more files from a first memory location, identifying a first signature and a second signature for each of the files, and storing the first signature and the second signature into a duplication reference list.

US2014122451A1 discloses a method and system for preventing duplicate file uploads in a remote content management system. A user device receives a hash value list associated with the files stored in the remote content management system. The user device calculates a hash value associated with new files to be uploaded. The system then compares the hash value(s) associated with the new file(s) to be uploaded with the hash value list received from the remote file storage system. If the hash values of any of the new files to be uploaded match a hash value on the hash value list, then the system prevents the new files from being uploaded to the remote file storage system.

### Summary

According to a first aspect disclosed herein, there is provided a method of operating a computing device having volatile data storage and non-volatile data storage, the method comprising:
(i) receiving an image file in the volatile data storage of the computing device, the image file being in a first image format;
(ii) calculating a hash value of the received image file;
(iii) comparing the hash value of the received image file with hash values of other image files that are saved in the non-volatile data storage of the computing device; and
(iv) if the hash value of the received image file is the same as the hash value of another image file that is saved in the non-volatile data storage of the computing device, then the received image file is not saved to the non-volatile data storage of the computing device;
(v) else, if the hash value of the received image file is not the same as the hash value of any other image file that is saved in the non-volatile data storage of the computing device, then the method further comprises:
(vi) decoding or converting the received image file to a second format, calculating a hash value of the second format version of the received image file, comparing the hash value of the second format version of the received image file with hash values of second format versions of other image files that are saved in the non-volatile data storage of at the computing device; and
(vii) if the hash value of the second format version of the received image file is the same as the hash value of a second format version of another image file that is saved in the non-volatile data storage of the computing device, then the received image file is not saved to the non-volatile data storage of the computing device; else, the received image file is saved to the non-volatile data storage of the computing device.

This helps to avoid duplicate image files being saved in the non-volatile data storage of the computing device. By comparing the image file as received, this can help save unnecessary decoding or converting of the image file (because, if it is found in the first hash comparison that the received image file is the same as an image file that has already been saved, then no further decoding or converting of the image file is required. If the first hash comparison does not identify any image files that relate to the same image, then the received image file is converted or decoded to a second, "common" format which can be used to compare with other image files in the non-volatile storage.

In general, the hash value of an image file may be a hash value of the whole file or for example a fixed first portion of an image file, and references to hash values of image files as used herein should be construed accordingly unless the context requires otherwise.

In an example, the second format is the BMP format.

In an example, steps subsequent to step (iv) are only carried out if the first image format of the received image file is not the BMP format.

In this example in the case that the first image format (i.e. the image format of the image file as received) is the BMP format, then the first check at (iii) is sufficient to identify duplicates. In such a case, the received image file can be saved directly to the non-volatile data storage of the computing device if the check at (iii) does not identify any same image file that has already been saved in the non-volatile data storage of the computing device.

In an example, the second format is the format of a decoded image as saved in a framebuffer of the computing device.

The framebuffer is a portion of volatile data storage (such as RAM) that contains a bitmap that drives a display screen of or connected to the computing device.

In an example, if at (iv) or (vii) the received image file is not saved to the non-volatile data storage of the computing device, then a link between the received image file and the other image file that has the same hash value is saved to the non-volatile data storage.

This enables the image file that has previously been saved (and which is a duplicate of the received image file) to be easily accessed and presented for display in the case that some application running on the computing device needs to display the image that is encoded by the received image file.

In an example, for any image file received at the computing device and saved in the computing device, a hash value of the received image file is saved in the non-volatile data storage of the computing device.

In an example, for any image file received at the computing device and saved in the computing device, a hash value of the BMP format of the saved image is saved in the non-volatile data storage of the computing device.

In an example, for any image file received at the computing device and saved in the non-volatile data storage of the computing device, a hash value of a decoded version of the image file as saved in a framebuffer of the computing device is saved in the non-volatile data storage of the computing device.

According to a second aspect disclosed herein, there is provided a computing device, the computing device comprising:
volatile data storage and non-volatile data storage;
the computing device being configured to carry out a method comprising:
   (i) receiving an image file in the volatile data storage of the computing device, the image file being in a first image format;
   (ii) calculating a hash value of the received image file;
   (iii) comparing the hash value of the received image file with hash values of other image files that are saved in the non-volatile data storage of the computing device; and
   (iv) if the hash value of the received image file is the same as the hash value of another image file that is saved in the non-volatile data storage of the computing device, then the received image file is not saved to the non-volatile data storage of the computing device;
   (v) else, if the hash value of the received image file is not the same as the hash value of any other image file that is saved in the non-volatile data storage of the computing device, then the method further comprises:
   (vi) decoding or converting the received image file to a second format, calculating a hash value of the second format version of the received image file, comparing the hash value of the second format version of the received image file with hash values of second format versions of other image files that are saved in the non-volatile data storage of at the computing device; and
   (vii) if the hash value of the second format version of the received image file is the same as the hash value of a second format version of another image file that is saved in the non-volatile data storage of the computing device, then the received image file is not saved to the non-volatile data storage of the computing device; else, the received image file is saved to the non-volatile data storage of the computing device.

According to a third aspect disclosed herein, there is provided a computer program comprising instructions such that when the computer program is executed on a computing device, the computing device is arranged to carry out a method comprising:
(i) receiving an image file in the volatile data storage of the computing device, the image file being in a first image format;
(ii) calculating a hash value of the received image file;
(iii) comparing the hash value of the received image file with hash values of other image files that are saved in the non-volatile data storage of the computing device; and
(iv) if the hash value of the received image file is the same as the hash value of another image file that is saved in the non-volatile data storage of the computing device, then the received image file is not saved to the non-volatile data storage of the computing device;
(v) else, if the hash value of the received image file is not the same as the hash value of any other image file that is saved in the non-volatile data storage of the computing device, then the method further comprises:
(vi) decoding or converting the received image file to a second format, calculating a hash value of the second format version of the received image file, comparing the hash value of the second format version of the received image file with hash values of second format versions of other image files that are saved in the non-volatile data storage of at the computing device; and
(vii) if the hash value of the second format version of the received image file is the same as the hash value of a second format version of another image file that is saved in the non-volatile data storage of the computing device, then the received image file is not saved to the non-volatile data storage of the computing device; else, the received image file is saved to the non-volatile data storage of the computing device.

There may be provided a non-transitory computer-readable storage medium storing a computer program as described above.

### Brief Description of the Drawings

To assist understanding of the present disclosure and to show how embodiments may be put into effect, reference is made by way of example to the accompanying drawings in which:
Figure 1 shows schematically a first example of a computing device according to an aspect of the present disclosure;
Figure 2 shows schematically a second example of a computing device according to an aspect of the present disclosure; and
Figure 3 shows a schematic flow chart for an example of a method according to an aspect of the present disclosure.

### Detailed Description

As mentioned, it is common for image files to be saved to non-volatile storage of a computing device so that the image files can be quickly retrieved and presented for display on some display device of or connected to the computing device when desired or necessary. However, it is often the case that an image file received at the computing device is a duplicate of an image file that has already been saved at the computing device. Further, even if the received image file itself is not an identical copy of an image file that has already been saved at the computing device, it is often the case that the images represented by the image files are in fact the same and that the image files differ only by the format of the image file and/or certain metadata associated with the image.

For example, Web browsers running on user devices or the like, internet search engines running on servers, etc. use a caching arrangement to store data from internet or World Wide Web sites as a user browses a site or the search engine "crawls" over a site to gather data. In particular, images are stored to non-volatile data storage of the user device, server, etc., often in accordance with local storage and/or cookie storage demands of the web sites/pages. Such images typically require a lot of space in the non-volatile data storage. Moreover, different Web pages often contain the same images and saving the same image each time the different Web pages are browsed or crawled, etc. results in duplication of the image files that are saved at the computing device.

A similar situation can occur with news portal websites, which typically gather information from a number of news Web sites. Often, the different news Web sites contain the same images, which results in duplication of those images at the news portal. Another similar example occurs with social media sites which often store the same image repeatedly.

Examples described herein can avoid duplicate image files being saved in the non-volatile data storage of the computing device. This therefore minimises the amount of data storage that is required to store image files. This can also make processing of image files faster in some cases. Examples described herein use a two-step comparison of hash values of received image files with previously stored image files with the result that only a single version of an image file for an image needs to be saved to the non-volatile data storage of the computing device.

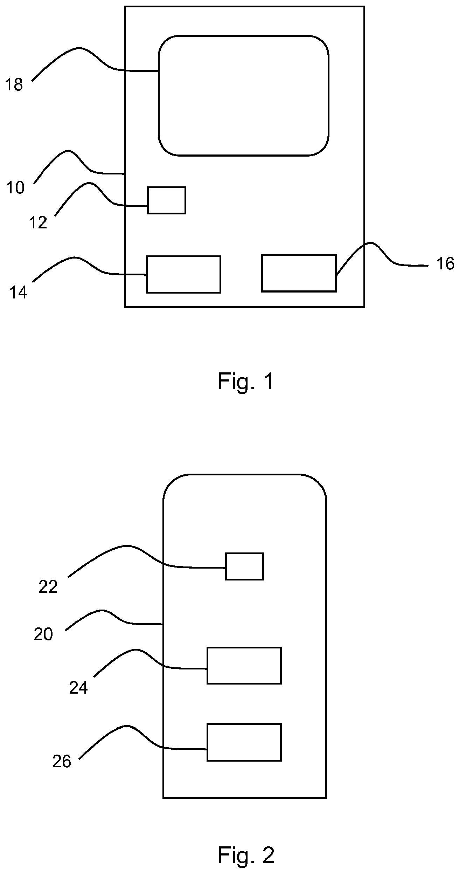

Referring first to Figure 1, this schematically a first example of a computing device 10 according to an aspect of the present disclosure. This example of a computing device 10 may be regarded as a user device, which is intended to be used by a user for general computing purposes, including for example browsing the Web. Examples of such devices include a personal computing device such as a laptop or desktop or tablet computer, a cellular phone (including a so-called "smart phone"), a media player, a video game console, an internet-connected television set, etc.

The computing device 10 has the usual processor 12, volatile data storage 14 and non-volatile data storage 16. As is well known, the non-volatile data storage 16 is used for "permanent" storage of data, computer programs, etc., whilst the volatile data storage 14 is used for running computer programs and temporary storage of data for the running computer programs. The computing device 10 of this example has an integral display screen 18 on which images may be displayed by the computing device 10. In other examples, the computing device 10 is connected to an external display screen on which images may be displayed by the computing device 10.

Referring to Figure 2, this schematically a second example of a computing device 20 according to an aspect of the present disclosure. This example of a computing device 20 is a server, which is typically a corporate device. In an example, this computing device 20 is a server that runs or is a component of an internet search engine. The computing device 20 may be connected to a display device (not shown) which may be local to the computing device 20 or may be remote and connected to the computing device over a network, including for example the internet. The computing device 20 has the usual processor 22, volatile data storage 24 and non-volatile data storage 26.

As mentioned, such computing devices 10, 20 use a caching arrangement to store data from internet or World Wide Web sites as a user browses a site or the search engine "crawls" over a site to gather data. In particular, conventionally, images are stored as image files to the non-volatile data storage 16, 26 of the computing device 10, 20 often in accordance with local storage and/or cookie storage demands of the web sites/pages. Such image files are conventionally stored even if the same image file has already been stored previously.

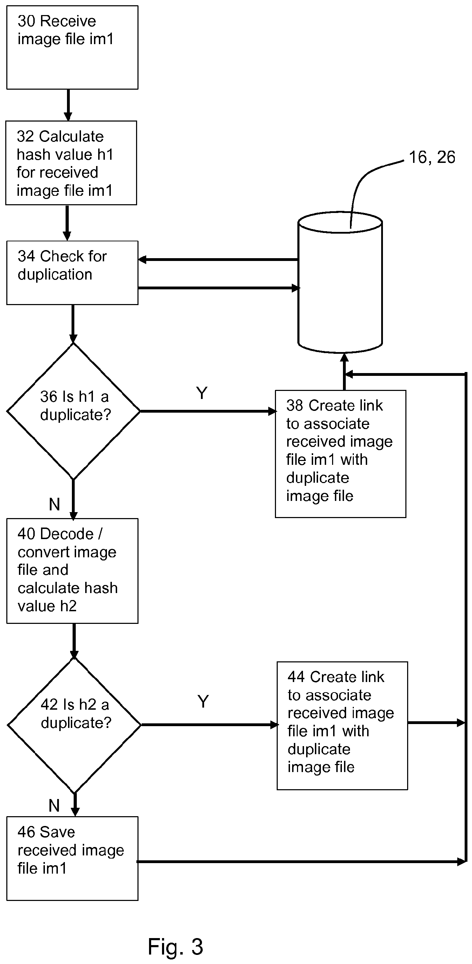

Referring now to Figure 3, this shows a schematic flow chart for an example of a method according to an aspect of the present disclosure. The method is carried out by a computing device, which may be for example a user device 10 or a corporate device or server 20 as described above.

At 30, an image file im1 is received at the computing device. As noted, this may be for example an image file from a Web site which is being browsed or crawled by the computing device (i.e. by and under control of software running on the computing device). In general, the image file im1 may be in any image format. Most commonly, the image format is a raster ("bitmap") format, which is a dot matrix data structure that represents a generally rectangular grid of pixels. Examples of raster formats include JPEG, PNG, BMP, TIFF, GIF, etc. The received image file im1 is initially stored only in the volatile data storage 14, 24 of the computing device.

At 32, a (first) hash value for the received image file im1 is calculated to result in a hash value h1. Hash functions for calculating hash values are well known. A hash function takes data as an input and performs a deterministic mathematical operation on the data to output a hash code or hash value of fixed length. Examples of hash functions include the MD5 and other message-digest algorithms, the SHA family of Secure Hash Algorithms, etc. (Whilst some of these may no longer be considered to be secure and so are not recommended for cryptography purposes, that is not an issue in the current application.) The hash value for the received image file im1 is calculated on the image file im1 as received (i.e. prior to any conversion or decoding of the received image file im1 to another format which may take place in the computing device).

At 34, the calculated first hash value h1 is compared with hash values associated with image files that are already stored in non-volatile data storage 16, 26 of the computing device. This is intended to check whether the received image file im1 is a (literal, identical) duplicate of an image file that is already stored in the non-volatile data storage of the computing device.

For this, hash values for any image files that have already been saved to the non-volatile data storage 16, 26 may be calculated "on the fly" as and when the comparison is required to be carried out. The image files that have already been saved to the non-volatile data storage 16, 26 may be accessed as and when necessary for this. As an alternative, hash values for any image files that have already been saved to the non-volatile data storage 16, 26 may have been calculated and saved to the non-volatile data storage 16, 26 previously. For example, this may be carried out when the previously saved image files are saved to the non-volatile data storage 16, 26 in the first instance.

As an option, the first hash value h1 calculated at 32 may be associated with the received image file im1 as a pair (im1, h1), which may be stored at the computing device for ease of reference. For example, the computing device may store similar associations between hash values h1 of image files already saved at the computing device and the image files themselves as an index or database or the like, which can be used when making the comparison at 34.

At 36, if the calculated first hash value h1 is the same as the hash value of an image file that has already been saved to the non-volatile data storage 16, 26 ("Y"), then the received image file im1 is not saved to the non-volatile data storage 16, 26. Instead, in an example, at 38 a link or association is created between the received image file im1 and the corresponding image file that has already been saved to the non-volatile data storage 16, 26. This link may be or include the (folder or directory) path to the location of the corresponding image file that has already been saved. In that way, an application running on the computing device which needs the image represented by the received image file im1 can locate and use the duplicate image which has previously been saved. Such a link may be saved to the non-volatile data storage 16, 26. Further, the received image file im1 may be removed or deleted from the volatile data storage 14, 24 of the computing device.

On the other hand, if at 36 it is determined that the calculated first hash value h1 is not the same as the hash value of an image file that has already been saved to the non-volatile data storage 16, 26 ("N"), then at 38 the received image file im1 is decoded or converted to a second, different file format. Two specific examples of this are discussed further below. This second, different file format to which image files may be converted or decoded is the same for all images received at the computing device, i.e. is a "common" format which is used for all images at this point. In such a case, at 40 a (second) hash value for the second format version of the received image file im1 is calculated to result in a second hash value h2.

Then, at 42, if the calculated second hash value h2 is the same as the hash value of an image file that has already been saved to the non-volatile data storage 16, 26 ("Y"), then the received image file im1 is not saved to the non-volatile data storage 16, 26. Instead, in an example, at 44 a link or association is created between the received image file im1 and the corresponding image file that has already been saved to the non-volatile data storage 16, 26. This link or association may be of the same type as the link or association discussed above for 38 and likewise may be saved to the non-volatile data storage 16, 26. Again, in this case, the received image file im1 may be removed or deleted from the volatile data storage 14, 24 of the computing device.

On the other hand, if at 42 it is determined that the calculated second hash value h2 is not the same as the hash value of an image file that has already been saved to the non-volatile data storage 16, 26 ("N"), then at 46 the received image file im1 is caused to be saved in the non-volatile data storage 16, 26.

As an option, the second hash value h2 calculated at 40 may be associated with the pair (im1, h1) to form a triplet (im1, h1, h2), which may be stored at the computing device for ease of reference. For example, the computing device may store similar associations between the first and second hash values h1, h2 of image files already saved at the computing device and the image files themselves as an index or database or the like, which can be used when making the comparison at 42.

The advantage of carrying out this decoding or converting of the received image file to a second "common" format reflects the fact that even though the received image file is different from an image file that has already been saved at the computing device, the image itself may be the same. The respective image files may be different because for example a different image format is used for the files (for example, one may be in the JPEG format and the other may be in the PNG format). Alternatively, the same image format may be used for the different image files, but some metadata in the file, such as the date of the file, may be different even though the image itself is the same.

As mentioned, at 38 the received image file im1 is decoded or converted to a second, different file format. Two specific examples of this are discussed now.

In a first example, the second file format is the BMP format. This is a raster or bitmap format that does not use compression of the image files. The BMP format is commonly used in for example the Microsoft Windows and OS/2 platforms. The BMP format is used to store bitmap digital images independently of the display device (such as a graphics adapter). These characteristics make the BMP format suitable for use as a "common" image file format for this purpose.

In a second example, the second file format is the format of a decoded image as saved in a framebuffer of the computing device. The framebuffer is a portion of volatile data storage (such as RAM) that contains a bitmap that drives a display screen of or connected to the computing device. Using the format of the received image file as saved in the framebuffer (i.e. calculating the second hash h2 on the final bitmap that is normally sent directly to the display screen for display of the image) can lead to further efficiencies during operation of the method. For example, it makes use of the fact that the received image file and image files with which it is compared may have already been decoded for the purpose of displaying the received image file at the display screen. Such decoding in the framebuffer is "platform-agnostic" and "image-agnostic" in that the decoded version of an image file is the same regardless of the particular hardware or software used in the computing device and regardless of the original format of the image file.

In general in the above, the hash value of an image file may be a hash value of the whole file or for example a fixed first portion of an image file, and references to hash values of image files as used herein should be construed accordingly unless the context requires otherwise. For example, it may be sufficient only to hash the first 1 kB of the image files.

Examples described herein generally avoid unnecessary storage of image files. Further, examples described herein can avoid unnecessary decoding processes (based on the first hash comparison) and, in cases where the first hash comparison does not find a duplicate, can still avoid unnecessary storage of image files (based on the second hash comparison, using for example the BMP format or bitmaps from the frame buffer of the computing device).

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to non-volatile data storage for storing data. This may be provided by a single device or by plural devices. Suitable devices include for example a hard disk and non-volatile semiconductor memory (including for example a solid-state drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments.

## Claims

1. A method of operating a computing device having volatile data storage and non-volatile data storage, the method comprising:
(i) receiving an image file in the volatile data storage of the computing device, the image file being in a first image format (30);
(ii) calculating a hash value of the received image file (32);
(iii) comparing the hash value of the received image file with hash values of other image files that are saved in the non-volatile data storage of the computing device (36); and
(iv) if the hash value of the received image file is the same as the hash value of another image file that is saved in the non-volatile data storage of the computing device, then the received image file is not saved to the non-volatile data storage of the computing device (38); **characterised by**:
(v) else, if the hash value of the received image file is not the same as the hash value of any other image file that is saved in the non-volatile data storage of the computing device (40), then the method further comprises:
(vi) decoding or converting the received image file to a second format, calculating a hash value of the second format version of the received image file (40), comparing the hash value of the second format version of the received image file with hash values of second format versions of other image files that are saved in the non-volatile data storage of at the computing device (42); and
(vii) if the hash value of the second format version of the received image file is the same as the hash value of a second format version of another image file that is saved in the non-volatile data storage of the computing device, then the received image file is not saved to the non-volatile data storage of the computing device (44); else, the received image file is saved to the non-volatile data storage of the computing device (46).

2. A method according to claim 1, wherein the second format is the BMP format.

3. A method according to claim 2, wherein steps subsequent to step (iv) are only carried out if the first image format of the received image file is not the BMP format.

4. A method according to any of claims 1 to 3, wherein the second format is the format of a decoded image as saved in a framebuffer of the computing device.

5. A method according to any of claims 1 to 4, wherein if at (iv) or (vii) the received image file is not saved to the non-volatile data storage of the computing device, then a link between the received image file and the other image file that has the same hash value is saved to the non-volatile data storage.

6. A method according to any of claims 1 to 5, wherein for any image file received at the computing device and saved in the computing device, a hash value of the received image file is saved in the non-volatile data storage of the computing device.

7. A method according to any of claims 1 to 6, wherein for any image file received at the computing device and saved in the computing device, a hash value of the BMP format of the saved image is saved in the non-volatile data storage of the computing device.

8. A method according to any of claims 1 to 7, wherein for any image file received at the computing device and saved in the non-volatile data storage of the computing device, a hash value of a decoded version of the image file as saved in a framebuffer of the computing device is saved in the non-volatile data storage of the computing device.

9. A computing device (10, 20), the computing device comprising:
volatile data storage (14, 24) and non-volatile data storage (16, 26);
the computing device being configured to carry out a method comprising:
(i) receiving an image file in the volatile data storage of the computing device, the image file being in a first image format (30);
(ii) calculating a hash value of the received image file (32);
(iii) comparing the hash value of the received image file with hash values of other image files that are saved in the non-volatile data storage of the computing device (36); and
(iv) if the hash value of the received image file is the same as the hash value of another image file that is saved in the non-volatile data storage of the computing device, then the received image file is not saved to the non-volatile data storage of the computing device (38); **characterised by**:
(v) else, if the hash value of the received image file is not the same as the hash value of any other image file that is saved in the non-volatile data storage of the computing device (40), then the method further comprises:
(vi) decoding or converting the received image file to a second format, calculating a hash value of the second format version of the received image file (40), comparing the hash value of the second format version of the received image file with hash values of second format versions of other image files that are saved in the non-volatile data storage of at the computing device (42); and
(vii) if the hash value of the second format version of the received image file is the same as the hash value of a second format version of another image file that is saved in the non-volatile data storage of the computing device, then the received image file is not saved to the non-volatile data storage of the computing device (44); else, the received image file is saved to the non-volatile data storage of the computing device (46).

10. A computer program comprising instructions such that when the computer program is executed on a computing device, the computing device is arranged to carry out a method comprising:
(i) receiving an image file in the volatile data storage of the computing device, the image file being in a first image format (30);
(ii) calculating a hash value of the received image file (32);
(iii) comparing the hash value of the received image file with hash values of other image files that are saved in the non-volatile data storage of the computing device (36); and
(iv) if the hash value of the received image file is the same as the hash value of another image file that is saved in the non-volatile data storage of the computing device, then the received image file is not saved to the non-volatile data storage of the computing device (38); **characterised by**:
(v) else, if the hash value of the received image file is not the same as the hash value of any other image file that is saved in the non-volatile data storage of the computing device (40), then the method further comprises:
(vi) decoding or converting the received image file to a second format, calculating a hash value of the second format version of the received image file (40), comparing the hash value of the second format version of the received image file with hash values of second format versions of other image files that are saved in the non-volatile data storage of at the computing device (42); and
(vii) if the hash value of the second format version of the received image file is the same as the hash value of a second format version of another image file that is saved in the non-volatile data storage of the computing device, then the received image file is not saved to the non-volatile data storage of the computing device (44); else, the received image file is saved to the non-volatile data storage of the computing device (46).

11. A computer program according to claim 10, wherein the second format is the BMP format.

12. A computer program according to claim 10 or claim 11, wherein the second format is the format of a decoded image as saved in a framebuffer of the computing device.

13. A computer program according to any of claims 10 to 12, wherein if at (iv) or (vii) the received image file is not saved to the non-volatile data storage of the computing device, then a link between the received image file and the other image file that has the same hash value is saved to the non-volatile data storage.

14. A computer program according to any of claims 10 to 13, wherein for any image file received at the computing device and saved in the computing device, a hash value of the received image file is saved in the non-volatile data storage of the computing device.

15. A computer program according to any of claims 10 to 14, wherein for any image file received at the computing device and saved in the computing device, a hash value of the BMP format of the saved image is saved in the non-volatile data storage of the computing device and/or a hash value of a decoded version of the image file as saved in a framebuffer of the computing device is saved in the non-volatile data storage of the computing device.

## Patentansprüche

1. Verfahren zum Betreiben eines Computergeräts mit flüchtigem Datenspeicher und nichtflüchtigem Datenspeicher, wobei das Verfahren aufweist:
(i) Empfangen einer Bilddatei im flüchtigen Datenspeicher des Computergeräts, wobei die Bilddatei in einem ersten Bildformat ist (30);
(ii) Berechnen eines Hash-Werts der empfangenen Bilddatei (32);
(iii) Vergleichen des Hash-Werts der empfangenen Bilddatei mit Hash-Werten anderer Bilddateien, die im nichtflüchtigen Datenspeicher des Computergeräts gespeichert sind (36); und
(iv) wenn der Hash-Wert der empfangenen Bilddatei derselbe ist wie der Hash-Wert einer anderen Bilddatei ist, die im nichtflüchtigen Datenspeicher des Computergeräts gespeichert ist, dann wird die empfangene Bilddatei nicht im nichtflüchtigen Datenspeicher des Computergeräts gespeichert (38); **gekennzeichnet durch**:
(v) andernfalls, wenn der Hash-Wert der empfangenen Bilddatei nicht derselbe ist wie der Hash-Wert irgendeiner anderen Bilddatei, die im nichtflüchtigen Datenspeicher des Computergeräts gespeichert ist (40), dann weist das Verfahren ferner auf:
(vi) Decodieren oder Konvertieren der empfangenen Bilddatei in ein zweites Format, Berechnen eines Hash-Werts der zweiten Formatversion der empfangenen Bilddatei (40), Vergleichen des Hash-Werts der zweiten Formatversion der empfangenen Bilddatei mit Hash-Werten von zweiten Formatversionen anderer Bilddateien, die im nichtflüchtigen Datenspeicher des Computergeräts gespeichert sind (42); und
(vii) wenn der Hash-Wert der zweiten Formatversion der empfangenen Bilddatei derselbe ist wie der Hash-Wert einer zweiten Formatversion einer anderen Bilddatei, die im nichtflüchtigen Datenspeicher des Computergeräts gespeichert ist, dann wird die empfangene Bilddatei nicht im nichtflüchtigen Datenspeicher des Computergeräts gespeichert (44); andernfalls wird die empfangene Bilddatei im nichtflüchtigen Datenspeicher des Computergeräts gespeichert (46).

2. Verfahren nach Anspruch 1, wobei das zweite Format das BMF-Format ist.

3. Verfahren nach Anspruch 2, wobei Schritte nach Schritt (iv) nur ausgeführt werden, wenn das erste Bildformat der empfangenen Bilddatei nicht das BMF-Format ist.

4. Verfahren nach einem der Ansprüche 1 bis 3, wobei das zweite Format das Format eines decodierten Bildes ist, wie es in einem Framepuffer des Computergeräts gespeichert ist.

5. Verfahren nach einem der Ansprüche 1 bis 4, wobei, wenn bei (iv) oder (vii) die empfangene Bilddatei nicht im nichtflüchtigen Datenspeicher des Computergeräts gespeichert wird, dann eine Verknüpfung zwischen der empfangenen Bilddatei und der anderen Bilddatei, die denselben Hash-Wert hat, im nichtflüchtigen Datenspeicher gespeichert wird.

6. Verfahren nach einem der Ansprüche 1 bis 5, wobei für jede am Computergerät empfangene und im Computergerät gespeicherte Bilddatei ein Hash-Wert der empfangenen Bilddatei im nichtflüchtigen Datenspeicher des Computergeräts gespeichert wird.

7. Verfahren nach einem der Ansprüche 1 bis 6, wobei für jede am Computergerät empfangene und im Computergerät gespeicherte Bilddatei ein Hash-Wert des BMP-Formats des gespeicherten Bildes im nichtflüchtigen Datenspeicher des Computergeräts gespeichert wird.

8. Verfahren nach einem der Ansprüche 1 bis 7, wobei für jede am Computergerät empfangene und im nichtflüchtigen Datenspeicher des Computergeräts gespeicherte Bilddatei ein Hash-Wert einer decodierten Version der Bilddatei, wie sie in einem Framepuffer der Computergeräts gespeichert ist, im nichtflüchtigen Datenspeicher des Computergeräts gespeichert wird.

9. Computergerät (10, 20), wobei das Computergerät aufweist:
einen flüchtigen Datenspeicher (14, 24) und einen nichtflüchtigen Datenspeicher (16, 26);
wobei das Computergerät konfiguriert ist, um ein Verfahren auszuführen, das aufweist:
(i) Empfangen einer Bilddatei im flüchtigen Datenspeicher des Computergeräts, wobei die Bilddatei in einem ersten Bildformat ist (30);
(ii) Berechnen eines Hash-Werts der empfangenen Bilddatei (32);
(iii) Vergleichen des Hash-Werts der empfangenen Bilddatei mit Hash-Werten anderer Bilddateien, die im nichtflüchtigen Datenspeicher des Computergeräts gespeichert sind (36); und
(iv) wenn der Hash-Wert der empfangenen Bilddatei derselbe ist wie der Hash-Wert einer anderen Bilddatei ist, die im nichtflüchtigen Datenspeicher des Computergeräts gespeichert ist, dann wird die empfangene Bilddatei nicht im nichtflüchtigen Datenspeicher des Computergeräts gespeichert (38); **gekennzeichnet durch**:
(v) andernfalls, wenn der Hash-Wert der empfangenen Bilddatei nicht derselbe ist wie der Hash-Wert irgendeiner anderen Bilddatei, die im nichtflüchtigen Datenspeicher des Computergeräts gespeichert ist (40), dann weist das Verfahren ferner auf:
(vi) Decodieren oder Konvertieren der empfangenen Bilddatei in ein zweites Format, Berechnen eines Hash-Werts der zweiten Formatversion der empfangenen Bilddatei (40), Vergleichen des Hash-Werts der zweiten Formatversion der empfangenen Bilddatei mit Hash-Werten von zweiten Formatversionen anderer Bilddateien, die im nichtflüchtigen Datenspeicher des Computergeräts gespeichert sind (42); und
(vii) wenn der Hash-Wert der zweiten Formatversion der empfangenen Bilddatei derselbe ist wie der Hash-Wert einer zweiten Formatversion einer anderen Bilddatei, die im nichtflüchtigen Datenspeicher des Computergeräts gespeichert ist, dann wird die empfangene Bilddatei nicht im nichtflüchtigen Datenspeicher des Computergeräts gespeichert (44); andernfalls wird die empfangene Bilddatei im nichtflüchtigen Datenspeicher des Computergeräts gespeichert (46).

10. Computerprogramm, das Anweisungen aufweist, sodass, wenn das Computerprogramm auf einem Computergerät ausgeführt wird, das Computergerät eingerichtet ist, um ein Verfahren auszuführen, das aufweist:
(i) Empfangen einer Bilddatei im flüchtigen Datenspeicher des Computergeräts, wobei die Bilddatei in einem ersten Bildformat ist (30);
(ii) Berechnen eines Hash-Werts der empfangenen Bilddatei (32);
(iii) Vergleichen des Hash-Werts der empfangenen Bilddatei mit Hash-Werten anderer Bilddateien, die im nichtflüchtigen Datenspeicher des Computergeräts gespeichert sind (36); und
(iv) wenn der Hash-Wert der empfangenen Bilddatei derselbe ist wie der Hash-Wert einer anderen Bilddatei ist, die im nichtflüchtigen Datenspeicher des Computergeräts gespeichert ist, dann wird die empfangene Bilddatei nicht im nichtflüchtigen Datenspeicher des Computergeräts gespeichert (38); **gekennzeichnet durch**:
(v) andernfalls, wenn der Hash-Wert der empfangenen Bilddatei nicht derselbe ist wie der Hash-Wert irgendeiner anderen Bilddatei, die im nichtflüchtigen Datenspeicher des Computergeräts gespeichert ist (40), dann weist das Verfahren ferner auf:
(vi) Decodieren oder Konvertieren der empfangenen Bilddatei in ein zweites Format, Berechnen eines Hash-Werts der zweiten Formatversion der empfangenen Bilddatei (40), Vergleichen des Hash-Werts der zweiten Formatversion der empfangenen Bilddatei mit Hash-Werten von zweiten Formatversionen anderer Bilddateien, die im nichtflüchtigen Datenspeicher des Computergeräts gespeichert sind (42); und
(vii) wenn der Hash-Wert der zweiten Formatversion der empfangenen Bilddatei derselbe ist wie der Hash-Wert einer zweiten Formatversion einer anderen Bilddatei, die im nichtflüchtigen Datenspeicher des Computergeräts gespeichert ist, dann wird die empfangene Bilddatei nicht im nichtflüchtigen Datenspeicher des Computergeräts gespeichert (44); andernfalls wird die empfangene Bilddatei im nichtflüchtigen Datenspeicher des Computergeräts gespeichert (46).

11. Computerprogramm nach Anspruch 10, wobei das zweite Format das BMF-Format ist.

12. Computerprogramm nach Anspruch 10 oder Anspruch 11, wobei das zweite Format das Format eines decodierten Bildes ist, wie es in einem Framepuffer des Computergeräts gespeichert ist.

13. Computerprogramm nach einem der Ansprüche 10 bis 12, wobei, wenn bei (iv) oder (vii) die empfangene Bilddatei nicht im nichtflüchtigen Datenspeicher des Computergeräts gespeichert wird, dann eine Verknüpfung zwischen der empfangenen Bilddatei und der anderen Bilddatei, die denselben Hash-Wert hat, im nichtflüchtigen Datenspeicher gespeichert wird.

14. Computerprogramm nach einem der Ansprüche 10 bis 13, wobei für jede am Computergerät empfangene und im Computergerät gespeicherte Bilddatei ein Hash-Wert der empfangenen Bilddatei im nichtflüchtigen Datenspeicher des Computergeräts gespeichert wird.

15. Computerprogramm nach einem der Ansprüche 10 bis 14, wobei für jede am Computergerät empfangene und im Computergerät gespeicherte Bilddatei ein Hash-Wert des BMP-Formats des gespeicherten Bildes im nichtflüchtigen Datenspeicher des Computergeräts gespeichert wird und/oder ein Hash-Wert einer decodierten Version der Bilddatei, wie sie in einem Framepuffer der Computergeräts gespeichert ist, im nichtflüchtigen Datenspeicher des Computergeräts gespeichert wird

## Revendications

1. Procédé de fonctionnement d'un dispositif informatique ayant un stockage de données volatile et un stockage de données non volatile, le procédé consistant à :
(i) recevoir un fichier image dans le stockage de données volatile du dispositif informatique, le fichier image étant dans un premier format d'image (30) ;
(ii) calculer une valeur de hachage du fichier image reçu (32) ;
(iii) comparer la valeur de hachage du fichier image reçu avec des valeurs de hachage d'autres fichiers images qui sont sauvegardés dans le stockage de données non volatile du dispositif informatique (36) ; et
(iv) si la valeur de hachage du fichier image reçu est la même que la valeur de hachage d'un autre fichier image qui est sauvegardé dans le stockage de données non volatile du dispositif informatique, alors le fichier image reçu n'est pas sauvegardé dans le stockage de données non volatile du dispositif informatique (38),
**caractérisé en ce que** :
(v) sinon, si la valeur de hachage du fichier image reçu n'est pas la même que la valeur de hachage de tout autre fichier image qui est sauvegardé dans le stockage de données non volatile du dispositif informatique (40), alors le procédé consiste en outre à :
(vi) décoder ou convertir le fichier image reçu en un deuxième format, calculer une valeur de hachage de la deuxième version de format du fichier image reçu (40), comparer la valeur de hachage de la deuxième version de format du fichier image reçu avec des valeurs de hachage des deuxièmes versions de format d'autres fichiers images qui sont sauvegardés dans le stockage de données non volatile du dispositif informatique (42) ; et
(vii) si la valeur de hachage de la deuxième version de format du fichier image reçu est la même que la valeur de hachage d'une deuxième version de format d'un autre fichier image qui est sauvegardé dans le stockage de données non volatile du dispositif informatique, alors le fichier image reçu n'est pas sauvegardé dans le stockage de données non volatile du dispositif informatique (44), sinon, le fichier image reçu est sauvegardé dans le stockage de données non volatile du dispositif informatique (46).

2. Procédé selon la revendication 1, dans lequel le deuxième format est le format BMP.

3. Procédé selon la revendication 2, dans lequel les étapes ultérieures à l'étape (iv) ne sont effectuées que si le premier format d'image du fichier image reçu n'est pas le format BMP.

4. Procédé selon l'une quelconque des revendications 1 à 3, dans lequel le deuxième format est le format d'une image décodée comme sauvegardé dans un tampon de trame du dispositif informatique.

5. Procédé selon l'une quelconque des revendications 1 à 4, dans lequel, si en (iv) ou en (vii) le fichier image reçu n'est pas sauvegardé dans le stockage de données non volatile du dispositif informatique, alors un lien entre le fichier image reçu et l'autre fichier image qui a la même valeur de hachage est sauvegardé dans le stockage de données non volatile.

6. Procédé selon l'une quelconque des revendications 1 à 5, dans lequel, pour tout fichier image reçu au niveau du dispositif informatique et sauvegardé dans le dispositif informatique, une valeur de hachage du fichier image reçu est sauvegardée dans le stockage de données non volatile du dispositif informatique.

7. Procédé selon l'une quelconque des revendications 1 à 6, dans lequel, pour tout fichier image reçu au niveau du dispositif informatique et sauvegardé dans le dispositif informatique, une valeur de hachage du format BMP de l'image sauvegardée est sauvegardée dans le stockage de données non volatile du dispositif informatique.

8. Procédé selon l'une quelconque des revendications 1 à 7, dans lequel, pour tout fichier image reçu au niveau du dispositif informatique et sauvegardé dans le stockage de données non volatile du dispositif informatique, une valeur de hachage d'une version décodée du fichier image comme sauvegardée dans un tampon de trame du dispositif informatique est sauvegardée dans le stockage de données non volatile du dispositif informatique.

9. Dispositif informatique (10, 20), le dispositif informatique comprenant :
un stockage de données volatile (14, 24) et un stockage de données non volatile (16, 26),
le dispositif informatique étant configuré pour effectuer un procédé consistant à :
(i) recevoir un fichier image dans le stockage de données volatile du dispositif informatique, le fichier image étant dans un premier format d'image (30) ;
(ii) calculer une valeur de hachage du fichier image reçu (32) ;
(iii) comparer la valeur de hachage du fichier image reçu avec des valeurs de hachage d'autres fichiers images qui sont sauvegardés dans le stockage de données non volatile du dispositif informatique (36) ; et
(iv) si la valeur de hachage du fichier image reçu est la même que la valeur de hachage d'un autre fichier image qui est sauvegardé dans le stockage de données non volatile du dispositif informatique, alors le fichier image reçu n'est pas sauvegardé dans le stockage de données non volatile du dispositif informatique (38),
**caractérisé en ce que** :
(v) sinon, si la valeur de hachage du fichier image reçu n'est pas la même que la valeur de hachage de tout autre fichier image qui est sauvegardé dans le stockage de données non volatile du dispositif informatique (40), alors le procédé consiste en outre à :
(vi) décoder ou convertir le fichier image reçu en un deuxième format, calculer une valeur de hachage de la deuxième version de format du fichier image reçu (40), comparer la valeur de hachage de la deuxième version de format du fichier image reçu avec des valeurs de hachage des deuxièmes versions de format d'autres fichiers images qui sont sauvegardés dans le stockage de données non volatile du dispositif informatique (42) ; et
(vii) si la valeur de hachage de la deuxième version de format du fichier image reçu est la même que la valeur de hachage d'une deuxième version de format d'un autre fichier image qui est sauvegardé dans le stockage de données non volatile du dispositif informatique, alors le fichier image reçu n'est pas sauvegardé dans le stockage de données non volatile du dispositif informatique (44), sinon, le fichier image reçu est sauvegardé dans le stockage de données non volatile du dispositif informatique (46).

10. Programme informatique comprenant des instructions telles que, lorsque le programme informatique est exécuté sur un dispositif informatique, le dispositif informatique est agencé pour effectuer un procédé consistant à :
(i) recevoir un fichier image dans le stockage de données volatile du dispositif informatique, le fichier image étant dans un premier format d'image (30) ;
(ii) calculer une valeur de hachage du fichier image reçu (32) ;
(iii) comparer la valeur de hachage du fichier image reçu avec des valeurs de hachage d'autres fichiers images qui sont sauvegardés dans le stockage de données non volatile du dispositif informatique (36) ; et
(iv) si la valeur de hachage du fichier image reçu est la même que la valeur de hachage d'un autre fichier image qui est sauvegardé dans le stockage de données non volatile du dispositif informatique, alors le fichier image reçu n'est pas sauvegardé dans le stockage de données non volatile du dispositif informatique (38),
**caractérisé en ce que** :
(v) sinon, si la valeur de hachage du fichier image reçu n'est pas la même que la valeur de hachage de tout autre fichier image qui est sauvegardé dans le stockage de données non volatile du dispositif informatique (40), alors le procédé consiste en outre à :
(vi) décoder ou convertir le fichier image reçu en un deuxième format, calculer une valeur de hachage de la deuxième version de format du fichier image reçu (40), comparer la valeur de hachage de la deuxième version de format du fichier image reçu avec des valeurs de hachage des deuxièmes versions de format d'autres fichiers images qui sont sauvegardés dans le stockage de données non volatile du dispositif informatique (42) ; et
(vii) si la valeur de hachage de la deuxième version de format du fichier image reçu est la même que la valeur de hachage d'une deuxième version de format d'un autre fichier image qui est sauvegardé dans le stockage de données non volatile du dispositif informatique, alors le fichier image reçu n'est pas sauvegardé dans le stockage de données non volatile du dispositif informatique (44), sinon, le fichier image reçu est sauvegardé dans le stockage de données non volatile du dispositif informatique (46).

11. Programme informatique selon la revendication 10, dans lequel le deuxième format est le format BMP.

12. Programme informatique selon la revendication 10 ou 11, dans lequel le deuxième format est le format d'une image décodée comme sauvegardé dans un tampon de trame du dispositif informatique.

13. Programme informatique selon l'une quelconque des revendications 10 à 12, dans lequel, si en (iv) ou en (vii) le fichier image reçu n'est pas sauvegardé dans le stockage de données non volatile du dispositif informatique, alors un lien entre le fichier image reçu et l'autre fichier image qui a la même valeur de hachage est sauvegardé dans le stockage de données non volatile.

14. Programme informatique selon l'une quelconque des revendications 10 à 13, dans lequel, pour tout fichier image reçu au niveau du dispositif informatique et sauvegardé dans le dispositif informatique, une valeur de hachage du fichier image reçu est sauvegardée dans le stockage de données non volatile du dispositif informatique.

15. Programme informatique selon l'une quelconque des revendications 10 à 14, dans lequel, pour tout fichier image reçu au niveau du dispositif informatique et sauvegardé dans le dispositif informatique, une valeur de hachage du format BMP de l'image sauvegardée est sauvegardée dans le stockage de données non volatile du dispositif informatique et/ou une valeur de hachage d'une version décodée du fichier image comme sauvegardée dans un tampon de trame du dispositif informatique est sauvegardée dans le stockage de données non volatile du dispositif informatique.
